# Europäisches Patentamt

## European Patent Office

## Office européen des brevets

(19)

(11) Numéro de publication: **0 147 266**
**B1**

(12) # FASCICULE DE BREVET EUROPEEN

(45) Date de publication du fascicule du brevet:
**22.04.87**

(51) Int. Cl.⁴: **B 60 P 3/38,** B 60 P 3/34

(21) Numéro de dépôt: **84402291.3**

(22) Date de dépôt: **13.11.84**

(54) **Cellule habitable extensible et transportable.**

(30) Priorité: **03.01.84 FR 8400091**

(43) Date de publication de la demande:
**03.07.85 Bulletin 85/27**

(45) Mention de la délivrance du brevet:
**22.04.87 Bulletin 87/17**

(84) Etats contractants désignés:
**BE DE FR GB IT NL**

(56) Documents cités:
**DE - A - 2 427 481**
**DE - A - 2 604 717**
**DE - A - 2 811 174**
**US - A - 3 021 852**
**US - A - 3 259 422**
**US - A - 3 635 515**
**US - A - 3 823 974**

(73) Titulaire: **Pottier, Jean Marie, 1 "Cévennes" rue d'Armentières, F-59850 Nieppe (FR)**

(72) Inventeur: **Pottier, Jean Marie, 1 "Cévennes" rue d'Armentières, F-59850 Nieppe (FR)**

(74) Mandataire: **Ecrepont, Robert, Cabinet Ecrepont 12 Place Simon Vollant (Porte de Paris), F-59800 Lille (FR)**

**Description**

L'invention est relative à une cellule habitable extensible et transportable et ce que ce soit sur le toit ou sur la plateforme d'un véhicule, ou sur un chassis tracté.

Plus précisément, l'invention concerne une cellule habitable comprenant, d'une part, une partie inférieure fixe qui est rendue solidaire du toit ou de la plateforme d'un véhicule ou du chassis d'une remorque et, d'autre part, une partie supérieure mobile entre une position repliée qui est une position de transport ou de stockage et une position déployée qui est une position d'utilisation, tel que defini dans le préambule de la revendication 1 et connu par exemple par le US-A-3 259 422.

Des dispositifs de ce type comprenant une partie inférieure fixe et une partie supérieure mobile pour rendre extensible le volume de la cellule habitable sont actuellement connus, dans le domaine des caravanes, des coffres de toit pour véhicule, des cellules de camping-car.

Certains de ces dispositifs connus (DE-A-2 811 174 et 2 427 481) sont constitués principalement par un coffre rigide, par exemple à fixer sur le toit d'un véhicule, lequel coffre renferme des éléments dépliables pour s'ouvrir à sa partie supérieure et à sa partie arrière et constituer, principalement sur l'arrière du véhicule, une simple extension toilée et donc à parois souples semblable à une tente.

Ils n'offrent donc pas d'autres possibilités de fixation de mobilier que sur leur coffre de surcroît privé de paroi arrière et, de ce fait, ils ne peuvent parvenir au résultat visé par la présente invention.

Plus prôches de l'invention, sont connus des dispositifs dont la cellule comprend une partie inférieure rigide et fixe ainsi qu'une partie supérieure mobile également rigide. Certains de ces dispositifs (US-A-3 021 852 et DE-A-2 604 717) ont leur partie supérieure rigide qui est mobile par articulation autour du bord avant de la partie fixe.

De tels dispositifs présentent l'inconvénient de parvenir après extension de la partie mobile à un volume habitable qui présente une forme complexe géométriquement peu rationnelle et qui se prête donc mal à une habitation même provisoire.

En outre, l'extension du volume habitable obtenu par l'articulation de la partie supérieure ne concerne que l'extrémité du coffre opposée à cette articulation.

Dans d'autres dispositifs à partie supérieure rigide et mobile (US-A-3 259 422, 3 635 515 et 3 823 974) cette partie supérieure se limite à un couvercle du coffre formant la partie inférieure fixe auquel coffre ce simple couvercle est relié par des moyens de guidage permettant que l'extension de volume s'obtienne par déplacement équivalent des deux extrémités du couvercle.

Si cela conduit à un volume habitable géométriquement plus rationnel, ce simple couvercle présente cependant l'inconvénient de n'autoriser qu'une extension de volume qui, soit, se fait exclusivement dans une direction verticale et n'est donc pas optimale (US-A-2 635 515 et 3 823 974), soit, exige de sacrifier la paroi arrière de la partie fixe et d'y adapter une structure souple (US-A-3 259 422) ce qui, à l'exemple des premiers dispositifs cités, limite la possibilité de fixation de mobilier et ne permet donc pas de tirer le meilleur parti possible du volume obtenu.

En outre, l'installation et le déploiement de ces cellules dont notamment la mise en place des parois latérales, frontales et postérieures, est relativement complexe.

Dans tous les cas, les parties fixe et mobile ne permettent que la fixation d'éléments bas, ce qui est peu favorable à un aménagement rationnel ou exige de prévoir des éléments hauts devant être mis en place séparément des parois ce qui rendrait encore plus longues et complexes les opérations de montage.

Un résultat que l'invention vise à obtenir est une cellule habitable selon le préambule de la revendication 1, extensible et transportable soit sur le toit ou la plateforme d'un véhicule, ou sur un chassis tracté dont la partie supérieure mobile est rigide et dont, après déploiement de cette partie supérieure mobile, le volume est géométriquement rationnel et offre de nombreuses parois rigide se prêtant à la fixation définitive d'éléments de mobilier, y compris d'éléments hauts.

Un autre résultat que l'invention vise à obtenir est une cellule dont l'extension est particulièrement simple à réaliser.

D'autres buts et avantages de la présente invention apparaîtront au cours de la description qui va suivre.

La cellule habitable extensible selon l'invention est caractérisée par le fait que la partie supérieure mobile et rigide de la cellule comprend, outre, la partie supérieure horizontale de la cellule, la partie arrière verticale de cette cellule, ce qui donne globalement à la partie mobile rigide et plus spécialement à ses parois latérales ainsi qu'à ses parois supérieure et arrière une forme de «L» renversé dont les ailes horizontale et verticale constituent respectivement l'une le haut et l'autre l'arrière de la cellule.

L'invention sera mieux comprise à l'aide de la description ci-après faite à titre d'exemple non limitatif, en regard du dessin ci-annexé qui représente schématiquement:

fig. 1 en vue de côté, une cellule habitable en position repliée, dans son application non limitative à un camping-car,

fig. 2 la cellule de la fig. 1 en position dépliée,

fig. 3 une variante de l'invention dans son application non limitative à une caravane,

fig. 4 la cellule de la fig. 3 en position dépliée,

fig. 5 une variante de l'invention dans son application non limitative à une cellule adaptable sur un véhicule de tourisme,

fig. 6 la cellule de la fig. 5 en position déployée.

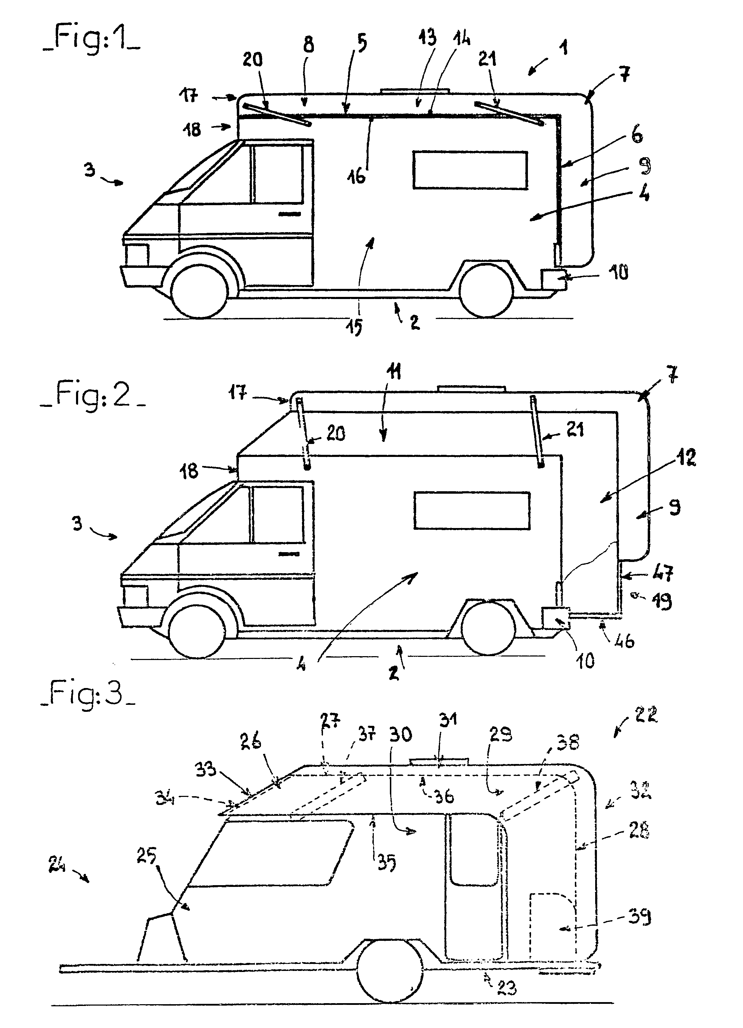

La fig. 1 représente, à titre d'illustration, une cellule 1, solidaire du chassis 2 d'un véhicule 3, notamment du type camionnette, l'ensemble constituant un véhicule habitable ou camping-car.

La cellule 1 comprend une partie inférieure rigide 4, qui est solidaire du chassis 2, qui se présente sous la forme d'un coffre ouvert au niveau de sa face supérieure 5 sensiblement horizontale et de sa face arrière 6 qui est sensiblement verticale.

Eventuellement, le volume intérieur de la partie inférieure rigide 4 est en communication avec l'habitacle propre du véhicule 3.

La cellule 1 comprend par ailleurs une partie supérieure rigide 7 qui est mobile par rapport à la partie inférieure rigide 4.

La fig. 1 représente la partie supérieure 7 en position repliée, où la partie supérieure mobile 7 est appliquée contre la partie inférieure fixe 4, cette position étant une position dite de transport ou de stockage de la cellule.

La fig. 2 représente quant à elle la partie supérieure 7 en position déployée, cette position étant la position d'habitation.

En position déployée, la partie mobile 7 reste approximativement parallèle à elle-même et elle est relevée et rejetée vers l'arrière du véhicule.

La partie supérieure mobile de la cellule 1 présente elle-même une partie supérieure sensiblement horizontale 8 prolongée par une partie arrière sensiblement verticale.

L'ensemble donne à la partie supérieure mobile 7 une forme globale de «L» renversé, dont l'aile 8 et l'aile 9 couvrent respectivement, en position de repli de la cellule, les faces supérieure 5 et arrière 6 de la partie inférieure rigide 4.

De préférence, tel que cela est représenté dans les figures 1 et 2, l'aile verticale 9 de la partie supérieure 7 couvre largement la face arrière 6 de la partie inférieure 4, et peut descendre notamment jusqu'au niveau du parechoc arrière 10 du véhicule 3.

Le mouvement de déploiement de la partie supérieure qui comprend un mouvement de relèvement et de rejet vers l'arrière donne donc naissance à une extension de volume qui s'étend d'une part en 11 au dessus de la face supérieure 5 de la partie inférieure 4 et en 12 en arrière de la face arrière 6, ces deux volumes étant en communication l'un avec l'autre.

Il faut souligner que le mouvement de rejet vers l'arrière a pour objet principal d'engendrer la partie arrière 12 de l'extension de volume, et que cette extension arrière 12 est délimitée en grande partie par l'aile verticale rigide 9 de la partie supérieure 7.

Dans la variante représentée dans la fig. 1 et 2, la partie supérieure 7 présente deux parois latérales 13 dont la découpe inférieure 14 présente sensiblement une forme de «L» renversé qui suit approximativement la forme globale de la partie supérieure 7.

Les parois latérales 15 de la partie inférieure 4 comprennent également une découpe supérieure 16 en forme de «L» renversé et lorsque la partie supérieure 7 est appliquée contre la partie inférieure 4, en position repliée, les deux découpes 14 et 16 correspondent sensiblement et les parois latérales 13 et 15 sont sensiblement dans le prolongement l'une de l'autre.

Naturellement, en position repliée de transport, tout moyen approprié convient pour positionner la partie supérieure 7 par rapport à la partie inférieure 4 et pour réaliser l'étanchéité au niveau de la jonction des découpes 14 et 16. Dans la position déployée de la fig. 2, la continuité entre les parois latérales 13 et 15 de la partie mobile 7 et de la partie fixe 4, ainsi que celle de leurs faces frontales respectives 17 et 18 est assurée par des moyens tels qu'une toile plastifiée qui est fixée le long des découpes de la partie supérieure 7 et de la partie inférieure 4.

A ce niveau, tout moyen approprié et par exemple une cordelette élastique cousue par point permet de replier la toile plastifiée 17 vers l'intérieur de la cellule simultanément au repli de la partie mobile 7 sur la partie fixe 4.

Des moyens schématisés en 19, qui seront décrits ultérieurement, délimitent en outre la partie verticale 12 de l'extension de volume au niveau de son extrémité inférieure.

Tout moyen approprié convient pour déplacer la partie mobile 7, et par exemple des vérins ou des bras oscillants 20 et 21 articulés au niveau de chacune de leurs extrémités à la partie fixe 4 et la partie mobile 7.

La partie mobile et la partie fixe sont réalisées, quant à elle, en tout matériau approprié, et notamment en résine armée de fibres de verre.

La fig. 3 représente en variante une cellule 22 qui est adaptée au chassis 23 d'une remorque 24 de manière à constituer notamment une caravane.

Ceci naturellement n'est qu'une illustration et la cellule 22 pourrait également être montée sur la plateforme d'un véhicule d'une manière semblable à la cellule 1.

De même que la cellule 1, la cellule 22 comprend une partie inférieure 25 rigide, solidaire du chassis 23 et une partie supérieure 26 rigide et mobile.

La partie inférieure 25 présente globalement la forme d'un coffre ouvert au niveau de sa face supérieure 27 et d'une grande partie au moins de sa face postérieure 28, et la partie supérieure 26 présente une forme de «L» renversé qui est appliquée contre la partie inférieure 25 en position repliée de transport et qui est déployée en position d'habitation.

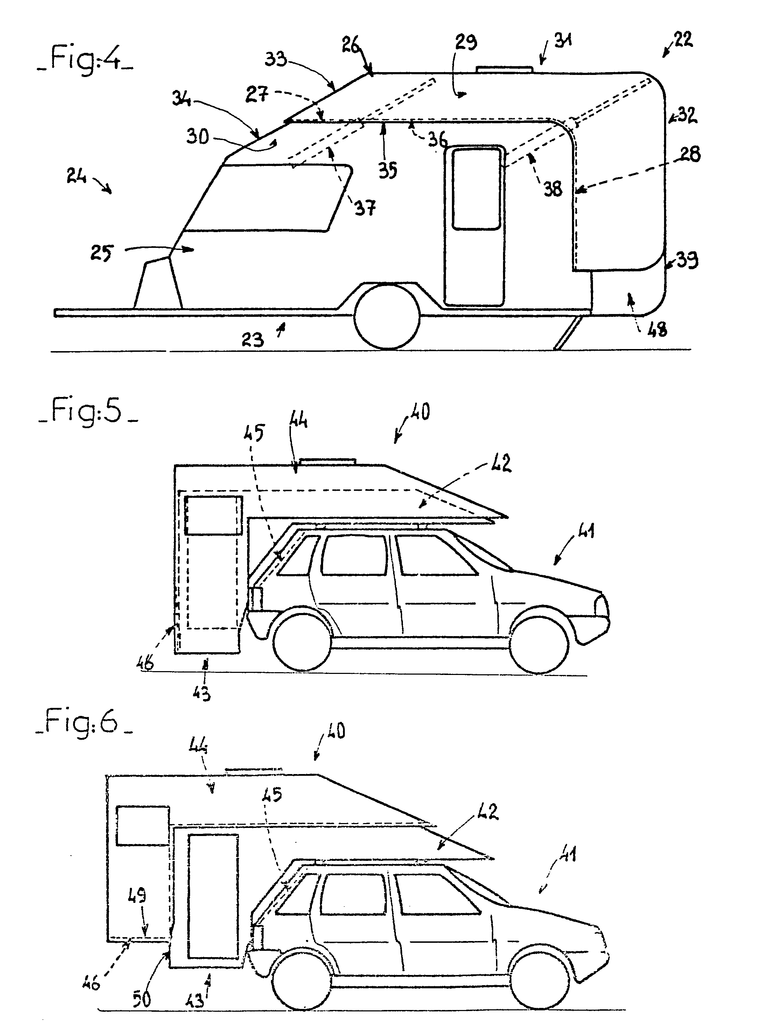

Selon la variante de la fig. 3 et 4, la partie supérieure 26 chevauche en position repliée de transport, le haut de la partie inférieure fixe.

Les parois latérales 29 de la partie supérieure mobile 26 couvrent les parois latérales 30 de la partie inférieure 25 sur une distance au moins égale au déplacement de la partie mobile 26 dans son mouvement de déploiement mesurée dans la direction de son déplacement.

Ainsi, globalement, l'aile horizontale 31 et l'aile verticale 32 des parois latérales 29 couvrent les parois latérales 30 sur une distance au moins égale respectivement aux composantes verticale et horizontale de déplacement de la partie mobile 26.

De préférence, la face frontale 33 de la partie mobile 26 et la portion supérieure 34 de la face frontale de la partie fixe 25 qu'elles couvrent en position de repli, sont parallèles entre elles et parallèles à la direction du déplacement de la partie mobile 26.

Selon un mode préférentiel de réalisation, les faces latérales 29 de la partie mobile 26 présentent une découpe inférieure 35 en forme de «L» renversé, qui correspond sensiblement à la découpe supérieure 36 des faces latérales 30 de la partie inférieure 25 et qui en est voisine en position déployée de la partie supérieure mobile 26.

A ce niveau, tout moyen approprié convient pour réaliser l'étanchéité entre la partie mobile et la partie fixe que ce soit d'ailleurs, en position d'habitation ou en position de transport et par exemple un joint ou un bourrelet d'étanchéité situé entre les parois latérales 29 et 30.

Les moyens pour déplacer la partie mobile 26 ont été schématisés de manière non limitative dans les figures 3 et 4 sous la forme de vérins 37, 38 qui peuvent être hydrauliques, pneumatiques ou simplement des vérins à ressort.

Egalement, des moyens schématisés en 39 qui seront décrits ultérieurement assurent la continuité en position d'habitation, entre la partie fixe 25 et la partie mobile 26 au niveau de son extrémité inférieure arrière.

Les figures 5 et 6 représentent en variante une cellule 40 semblable à la cellule 22 des figures 3 et 4, mais adaptée plus particulièrement à un véhicule schématisé en 41 qui, de préférence, est du type break ou équipé d'un hayon.

De même que dans le cas précédent, la cellule 40 comprend une partie inférieure rigide 42, qui couvre notamment le toit du véhicule et redescend en 43 le long de sa partie arrière.

Cette partie inférieure 42 est solidarisée au véhicule 41 par tout moyen approprié et par exemple par des barres porteuses de toit, et éventuellement toute fixation appropriée au niveau par exemple du parechoc arrière du véhicule, ou de la partie arrière de son chassis.

La cellule 40 comprend en outre une partie supérieure rigide 44 mobile entre une position repliée de transport et une position déployée d'habitation.

Avantageusement, dans cette variante, le volume intérieur de la cellule 40 est en communication avec l'habitacle du véhicule au moyen d'un sas schématisé en 45.

Pour ce faire, la porte arrière du véhicule 41 à été démontée préalablement à l'installation de la cellule 40 et la paroi du sas 45 pénètre dans l'habitacle 41 au travers de l'ouverture de cette porte et son contour extérieur épouse sensiblement celui de l'ouverture de la porte.

De préférence, le sas 45 est assemblé de manière amovible à la cellule 40, ce qui permet de réaliser une même cellule 40 pour différents véhicules, et d'y assembler différents sas 45 spécifiques pour chaque type de véhicule.

La cellule 40 comprend en outre des moyens 46, du même type que les moyens 38 de la cellule 22 et 19 de la cellule 1.

Ces moyens assurent la continuité entre la paroi inférieure de la partie inférieure de la cellule, et l'extrémité inférieure de la partie supérieure mobile.

Ils permettent également, par des moyens de fixation appropriés, de solidariser l'extrémité inférieure de la partie supérieure mobile de la cellule à sa partie inférieure fixe. En position repliée de transport, ces moyens sont escamotés par exemple dans le volume de la partie inférieure ou dans celui de la partie supérieure mobile.

Ils consistent, par exemple, en une pluralité de parois articulées entre elles et au niveau de la face postérieure de la partie inférieure fixe de la cellule.

A titre d'illustration, en fig. 2, on a représenté des moyens comprenant deux parois 46 et 47, dont la paroi 46 est articulée dans l'extrémité inférieure de la face postérieure 6 de la partie inférieure 4 et prolonge de manière sensiblement continue le plancher de cette partie.

La paroi 47, quant à elle, est articulée à la paroi 46 et son extrémité supérieure est reliée par tout moyen approprié à l'extrémité inférieure de l'aile verticale 9 de la partie supérieure 7.

En position escamotée, la paroi 47 se replie contre la paroi 45 et l'ensemble se replie dans la partie inférieure fixe 4. Eventuellement, les parois latérales (non représentées) articulées d'une façon semblable établissent la continuité avec la toile plastifiée 17 ou plus généralement la paroi latérale de la partie mobile 7.

Des moyens 38 sont représentés en variante en figures 3 et 4 sous la forme d'un bac rigide comprenant une paroi de fond, une paroi postérieure et deux parois latérales, qui est articulé au niveau de l'extrémité inférieure de la face postérieure 28 de la partie fixe 25.

En position repliée de transport, le bac s'escamoté à l'intérieur du volume de la partie fixe 25 ou 42 et en position déployée, il est rabattu et relié de manière sensiblement continue le plancher de la partie fixe et les parois verticales postérieures et latérales de la partie mobile 26 ou 44.

Naturellement, tout autre moyen approprié convient pour réaliser cette continuité, on pourrait notamment mettre en oeuvre un bac, qui au lieu d'être articulé serait coulissant horizontalement entre une position où il est escamoté, correspondant à la position repliée de transport et une position sortie correspondant à la position d'habitation de la cellule.

On pourrait également mettre en oeuvre une simple paroi escamotable, articulée ou coulissante, telle qu'elle est schématisée en 46 dans la fig. 6, qui vient obturer l'extrémité inférieure de la partie mobile 40 entre sa face postérieure et ses deux faces latérales.

La face postérieure de la partie inférieure 42 quant à elle présente une portion de paroi inférieure 50 sur laquelle éventuellement la paroi 49 vient prendre appui.

L'homme de l'art est à même de déterminer les moyens d'articulation et les moyens de verrouillage les plus appropriés pour ces différents moyens.

Egalement, il pourra adjoindre à la cellule de l'invention d'autres moyens, tels que par exemple des pieds escamotables prenant appui sur le sol ou des jambes de force pour rigidifier la partie en porte à faux de la cellule en position d'habitation.

La cellule qui fait l'objet de l'invention présente donc une extension optimum de volume, qui se fait à la fois sur le dessus et sur la partie arrière.

Contrairement à certains dispositifs existants, l'extension arrière de volume est limitée par au moins une paroi de la partie mobile qui est rigide et permet d'y fixer des meubles ce qui rend le volume beaucoup plus fonctionnel et rend cette partie arrière réellement habitable.

Naturellement, la présente description n'est donnée qu'à titre indicatif et l'on pourrait adopter d'autres mises en oeuvre de l'invention sans pour autant sortir du cadre de celle-ci.

**Revendications**

1. Cellule habitable extensible transportable soit sur le toit ou la plateforme d'un véhicule (3, 41) au volume intérieur duquel elle peut être associée ou intégrée, soit sur le chassis (23) d'une remorque (24) tractée, cette cellule comprenant une partie inférieure rigide (4, 25, 42) et une partie supérieure rigide (7, 26, 44), mobile par rapport à la partie inférieure rigide entre une position repliée dite de transport où la partie supérieure mobile (7, 26, 44) est appliquée contre la partie inférieure (4, 25, 42) et une position habitable où la partie mobile (7, 26, 44) est relevée et rejetée vers l'arrière, caractérisée en ce que la partie supérieure mobile et rigide (7, 26, 44) de la cellule comprend une partie supérieure horizontale de la cellule, et une partie arrière verticale ce qui donne globalement à la partie supérieure mobile (7, 26, 44) une forme de «L» renversé dont une aile (8) comprend le haut de la cellule et l'autre (9) l'arrière de cette cellule.

2. Cellule selon la revendication 1, caractérisée en ce que l'aile verticale (9) de la partie supérieure mobile (7, 26, 44) s'étend en position repliée de transport de la cellule sur sensiblement toute la hauteur de la face postérieure (6) de la partie inférieure rigide (4, 24, 42) de la cellule.

3. Cellule selon la revendication 1 ou 2, caractérisée en ce que la partie supérieure mobile (7) comprend deux parois latérales (13) dont la découpe inférieure (14) a une forme de «L» renversé et correspond sensiblement à la découpe (16) en «L» renversé supérieur des parois latérales (15) de la partie inférieure fixe (4), que les découpes (14, 16) en «L» renversé suivent globalement la forme de «L» de la partie supérieure mobile (7), que les découpes inférieures (14) et supérieures (16) des parois latérales reposent respectivement l'une sur l'autre en position de transport.

4. Cellule selon la revendication 1, caractérisée en ce que la partie supérieure mobile (26, 44) comprend deux parois latérales (29) qui, en position de transport, couvrent respectivement les parois latérales (30) de la partie inférieure (25) sur une distance au moins égale au déplacement de la partie supérieure mobile (26) de sa position de transport à sa position d'habitation, mesurée dans la direction du dit déplacement.

5. Cellule selon la revendication 3, caractérisée en ce que la partie supérieure mobile (26, 44) comprend deux parois latérales (29) dont la découpe inférieure (35) présente globalement une forme de «L» renversé et correspond sensiblement à la découpe en «L» renversé supérieure (36) des parois latérales (30) de la partie inférieure (25) et que les dites découpes inférieures (35) et supérieures (36) sont voisines l'une de l'autre en position d'habitation.

6. Cellule selon la revendication 4 ou 5, caractérisée en ce que la paroi frontale (33) de la partie mobile (26) couvre, en position repliée de transport, la partie supérieure (34) de la paroi frontale de la partie inférieure (25), que ces parois (33, 34) sont parallèles entre elles et inclinées dans la direction du déplacement de la partie supérieure mobile 26.

7. Cellule selon l'une quelconque des revendications 1 à 6, caractérisée en ce qu'au niveau de l'extrémité inférieure de la partie supérieure mobile (7, 26, 44), des moyens (19, 38, 46) escamotables en position repliée de transport referment en position d'habitation l'ouverture engendrée par le déplacement de la partie supérieure mobile (4, 26, 44) à ce niveau.

8. Cellule selon la revendication 7, caractérisée en ce que les dits moyens d'obturation (39) sont un bac (48) basculant rigide, escamotable à l'intérieur de la partie inférieure fixe en position repliée de transport dont les parois en position basculée d'habitation prolongent de manière sensiblement continue le plancher de la partie inférieure fixe, et la paroi postérieure des parois latérales de l'extrémité inférieure de la partie supérieure mobile (7, 26, 44).

9. Cellule selon la revendication 7, caractérisée en ce que les moyens d'obturation (19) sont au moins deux parois articulées (46, 47) l'une par rapport à l'autre et par rapport à l'extrémité inférieure de la partie inférieure de la cellule, escamotables en position repliée de transport, et dépliables de façon à prolonger de manière sensiblement continue le plancher de la partie inférieure (4, 25, 42) et la paroi arrière de la partie supérieure mobile (4, 26, 44).

10. Cellule habitable selon l'une quelconque des revendications 1 à 9, transportable sur le toit d'un véhicule présentant une porte ou un hayon arrière, dont la partie inférieure (42) de la cellule redescend sur l'arrière du véhicule (43), caractérisée en ce qu'elle présente un sas de communication (45) de son volume avec l'habitacle du véhicule, dont la paroi pénètre à l'intérieur de l'habitacle au travers de l'ouverture de la porte arrière, dont elle épouse sensiblement le contour, la dite porte ayant été démontée préalablement à l'installation de la cellule.

**Patentansprüche**

1. Ausziehbare und transportable Wohnzelle für das Dach oder die Plattform eines Fahrzeugs (3, 41), in dessen Innenraum sie damit verbunden oder damit integriert ist, oder für das Chassis (23) eines gezogenen Anhängers (24), wobei diese Zelle einen unteren starren Bereich (4, 25, 42) und einen oberen steifen Bereich (7, 26, 44) aufweist, der bezüglich des unteren starren Bereichs zwischen einer eingefalteten Transportstellung, bei der der obere bewegliche Teil (7, 26, 44) gegen den unteren Teil (4, 25, 42) angelegt ist, und einer Wohnstellung beweglich ist, bei der der bewegliche Teil (7, 26, 44) angehoben und nach hinten zurückgeschoben ist, dadurch gekennzeichnet, dass der obere bewegliche und steife Bereich (7, 26, 44) der Zelle einen oberen horizontalen Bereich der Zelle und einen rückwärtigen senkrechten Teil aufweist, die dem beweglichen oberen Teil (7, 26, 44) im wesentlichen die Form eines umgestürzten «L» verleiht, dessen einer Schenkel (8) den oberen Teil der Zelle und dessen anderer Schenkel (9) den rückwärtigen Teil der Zelle aufweist.

2. Zelle nach Anspruch 1, dadurch gekennzeichnet, dass der vertikale Schenkel (9) des oberen beweglichen Teils (7, 26, 44) in der zusammengefalteten Transportstellung der Zelle sich im wesentlichen über die gesamte Höhe der rückwärtigen Stirnfläche (6) des unteren steifen Bereichs (4, 25, 42) der Zelle erstreckt.

3. Zelle nach Anspruch 1 oder 2, dadurch gekennzeichnet, dass der obere bewegliche Teil (7) zwei Seitenwände (13) aufweist, dessen unterer Abschnitt (14) die Form eines umgefallenen «L» aufweist und im wesentlichen dem Abschnitt (16) in Form eines umgefallenen «L» über den Seitenänden (15) des unteren festen Teiles (4) entspricht, wobei die Abschnitte (14, 16) in Form des umgefallenen «L» im wesentlichen der Form des «L» des oberen beweglichen Teils (7) folgen, und dass die unteren Abschnitte (14) und oberen Abschnitte (16) der Seitenwände jeweils in der Transportstellung aufeinander liegen.

4. Zelle nach Anspruch 1, dadurch gekennzeichnet, dass der obere bewegliche Bereich (26, 44) zwei Seitenwände (29) aufweist, die in der Transportstellung jeweils die Seitenwände (30) des unteren Teils (25) mit einem Abstand bedecken, der zumindest gleich dem Abstand der Platzänderung des oberen beweglichen Teils (26) von seiner Transportstellung zu seiner Wohnlage, gemessen in der Richtung der Ortsveränderung entspricht.

5. Zelle nach Anspruch 3, dadurch gekennzeichnet, dass der obere bewegliche Teil (26, 44) zwei Seitenwände (29) aufweist, dessen unterer Abschnitt (35) im wesentlichen die Form eines umgefallenen «L» darstellt und im wesentlichen dem oberen Abschnitt (26) in Form eines umgekehrten «L» der Seitenwände (30) des unteren Teils (25) entspricht, und dass die unteren Abschnitte (35) und oberen Abschnitte (36) in der Wohnstellung zueinander benachbart sind.

6. Zelle nach Anspruch 4 oder 5, dadurch gekennzeichnet, dass die Vorderwand (33) des beweglichen Teils (26) in der zusammengefalteten Transportstellung den oberen Teil (34) der Vorderwand des unteren Teils (25) abdeckt, und dass diese Wände (33, 34) zueinander parallel und in Richtung der Ortsveränderung des oberen beweglichen Teils (26) geneigt sind.

7. Zelle nach einem der Ansprüche 1 bis 6, dadurch gekennzeichnet, dass in Höhe des unteren Endes des oberen beweglichen Teils (7, 26, 44) solche in die zusammengefaltete Transportstellung einziehbaren Mittel (19, 38, 46) die durch die Ortsveränderung des oberen beweglichen Teils (4, 26, 44) zu dieser Höhe erzeugte Öffnung in der Wohnstellung wieder schliessen.

8. Zelle nach Anspruch 7, dadurch gekennzeichnet, dass die Verschlussmittel (39) als steife Kippmulde (48) ausgebildet sind, die in das Innere des unteren festen Teils in der zusammengefalteten Transportstellung einziehbar ist, wobei deren Seitenwände in der ausgekippten Wohnlage im wesentlichen den Boden des festen unteren Teils und wobei die Hinterwand der Seitenwände das untere Ende des oberen beweglichen Teils (7, 26, 44) verlängern.

9. Zelle nach Anspruch 7, dadurch gekennzeichnet, dass die Verschlussmittel (19) zumindest zwei schwenkbare Wände (46, 47) sind, die aneinander und bezüglich des unteren Endes des unteren Teils der Zelle verschwenkbar, einziehbar in die zusammengefaltete Transportstellung und dergestalt entfaltbar sind, dass sie im wesentlichen den Boden des unteren Teils (4, 25, 42) und die Rückwand des oberen beweglichen Teils (4, 26, 44) verlängern.

10. Wohnzelle nach einem der Ansprüche 1 bis 9, die auf dem Dach eines Fahrzeugs transportierbar ist und eine rückwärtige Tür oder einen rückwärtigen Gepäckraum aufweist, dessen unterer Teil (42) sich bis hinter den hinteren Teil des Fahrzeugs (43) nach unten erstreckt, dadurch gekennzeichnet, dass eine Verbindungsschleuse (45) mit ihrem Volumen mit dem Fahrgastraum des Fahrzeugs vorgesehen ist, deren Wand in das Innere der Fahrgastzelle quer zu der Öffnung der rückwärtigen Tür hineinreicht, deren Umriss die Wand im wesentlichen einnimmt, wobei die Tür vor der Installation der Zelle demontiert wird.

## Claims

1. An extensible and transportable inhabitable cell either on the roof or the tail of a vehicle (3, 41) the internal compartment of which can be associated or integrated therewith, either on the chassis (23) of a trailer (24), the cell comprising a rigid lower portion (4, 25, 42) and a rigid upper portion (7, 26, 44), which is displaceable relative to the rigid lower portion between a collapsed i.e. transport position or the movable upper portion (7, 26, 42) rests against the lower portion (4, 25, 42) and an inhabitable position where the movable portion (7, 26, 44) is lifted and pushed rearwards, characterised in that the rigid, movable upper portion (7, 26, 44) of the cell comprises an upper horizontal portion of the cell, and a vertical rear portion which gives the moving upper portion (7, 26, 24) an overall inverted L-shape of which one wing (8) comprises the top of the cell and the other (9) the rear of the cell.

2. A cell according to claim 1, characterised in that the vertical wing (9) of the moving upper portion (7, 26, 44) extends in the collapsed cell transport position substantially over the full height of the rear face (6) of the rigid lower portion (4, 25, 42) of the cell.

3. A cell according to claim 1 or 2, characterised in that the movable upper portion (7) comprises two lateral walls (13) the lower section (14) of which has an inverted L-shape and substantially corresponds to the upper inverted L-section (16) of the lateral walls (15) of the fixed lower portion (4), that the inverted L-shape sections (14, 16) follow the overall L-shape of the movable upper portion (7), that the lower (14) and upper (16) sections of the lateral rest respectively one on top of another in the transport position.

4. A cell according to claim 1, characterised in that the movable upper portion (26, 44) comprises two lateral walls (29) which, in the transport position, cover respectively the lateral walls (30) of the lower portion over a distance at least equal to the displacement of the movable upper portion (26) from its transport position to its habitation position, measured in the direction of this displacement.

5. A cell according to claim 3, characterised in that the movable upper portion (26, 44) comprises two lateral walls (29) the lower section (35) of which has the overall shape of an inverted «L» and corresponds substantially to the upper section (36) in the form of an inverted «L» of the lateral walls (30) of the lower portion (25) and that the said lower (35) and upper (36) sections are adjacent one another in the habitation position.

6. A cell according to claim 4 or 5, characterised in that the front wall (33) of the movable wall (26) covers, in the collapsed transport position, the upper portion (34) of the front wall of the lower portion (25), that these walls (33, 34) are parallel to one another and inclined in the direction of displacement of the movable upper portion (26).

7. A cell according to any one of claims 1 to 6, characterised in that level with the lower end of the movable upper portion (7, 26, 44), retractable means (19, 38, 46) collapsed transport position close, in the habitation position the opening generated by the displacement of the movable upper portion (4, 26, 44) at this level.

8. A cell according to claim 7, characterised in that the said closing means (39) are a rigid dump body (48), which is retractable inside the fixed lower portion in the collapsed transport position the walls of which in the tilted habitation position extends in a substantially continuous manner the floor of the fixed lower portion, and the rear walls of the lateral walls of the lower end of the movable upper portion (7, 26, 44).

9. A cell according to claim 7, characterised in that the closing means (19) are at least two walls (46, 47) articulated relative to one another and to the lower end of the lower portion of the cell, which are retractable in the collapsed transport position, and which can be swung open so as to extend in a substantially continuous manner the floor of the lower portion (4, 25, 42) and the rear wall of the moving upper portion (4, 26, 44).

10. An inhabitable cell according to any one of claims 1 to 9, which is transportable on the roof of a vehicle having a rear door or gate, of which the lower portion (42) of the cell extends down as far as the rear of the vehicle (43), characterised in that it has a passage (45) communicating the compartment thereof with the passenger cabin of the vehicle, the wall of which penetrates inside the passenger cabin through the opening of the rear door, to the shape of which it substantially corresponds, the said door having been removed prior to the installation of the cell.

_Fig:1_

_Fig:2_

_Fig:3_

_Fig:4_

_Fig:5_

_Fig:6_